# EUROPÄISCHE PATENTANMELDUNG

(11) **EP 0 780 207 A2**
(43) Veröffentlichungstag der Anmeldung: **25.06.1997**
(21) Anmeldenummer: 96119918.9
(22) Anmeldetag: 12.12.1996
(51) Int. Cl.: B29C 44/20, B29C 43/30, B32B 27/32

(54) **Verfahren zur Herstellung und mehrschichtig aufgebaute Beläge auf Polyolefinbasis mit geschäumten Zwischenschichten**

(30) Priorität: 23.12.1995 DE 19548681
(71) Anmelder: Tarkett Aktiengesellschaft, 67227 Frankenthal (DE)
(72) Erfinder: Bickhardt, Susanne, Dr., 70327 Stuttgart (DE); Rein, Brigitte, 67065 Ludwigshafen (DE); Müller, Norbert, Dr., 67227 Frankenthal (DE); Hofmann, Volker, 67590 Monsheim (DE)
(74) Vertreter: Patentanwälte Zellentin & Partner

(57) **Zusammenfassung**

Die vorliegende Erfindung betrifft ein Verfahren zum Herstellen von geschäumten Schichten aus Polyolefinen auf Kalandern, bei welchem als Polyolefine mit Metallocen-Katalysatoren polymerisierte Polyolefin-Elastomere (POE) (oder Polyolefin-Plastomere (POP)) in einer Menge von
20 - 100% POE und/oder
20 - 100% POP sowie
0 - 80 % eines anderen Polyolefins
verwendet werden, welche zusammen mit
bis zu 100 Teilen eines mineralischen Füllstoffes und
1 - 10 Teilen eines geeigneten chemischen Treibmittels
bezogen auf 100 Teile Polyolefin
bei geeigneten Temperaturen auf einem Mehrwalzenkalander zu Folien ausgewalzt, und diese allein oder nach doublieren mit anderen Treibmittel-freien Folien aus Polyolefinen in einem Schäumofen auf Temperaturen über dem Zersetzungspunkt des Treibmittels erhitzt und aufgeschäumt werden und neue Beläge, die nach diesem Verfahren hergestellt werden.

## Beschreibung

Die vorliegende Erfindung beschreibt ein Verfahren zur Herstellung von mehrschichtig aufgebauten Belägen auf Polyolefinbasis mit geschäumten Zwischenschichten.

Um die Gebrauchseigenschaften von Bodenbelägen, wie z.B. Gehkomfort, Trittschalldämmung und Wärmedämmung (Fußwärme) zu verbessern, werden häufig hierfür geeignete Schaumfolien unterlegt.

Hat die Schaumfolie keinen festen Verbund mit dem Belag bedeutet dies einen zusätzlichen Arbeitsgang.

Bei mehrschichtigen Belagsaufbauten besteht die Möglichkeit, eine oder mehrere kompakte Schichten, durch dickere Schaumschichten zu ersetzen, bzw. diese zusätzlich einzufügen. Bei gleicher Gesamtschichtdicke kann so Gewicht eingespart werden, da der entstehende Schaum zusätzliches Volumen bringt. Ist die Schaumschicht weich und elastisch, kann das Endmaterial geschmeidiger bzw. verlegefreundlicher ausfallen.

Folgende Herstellungsverfahren zur Darstellung von Schaumschichten sind bekannt:

### Plastisolverschäumung:

Das am häufigsten angewendete Verfahren ist die Verschäumung einer Plastisolschicht, d.h. einer aus Kunststoffpulver und Weichmacher gebildeten pastösen Schicht, entweder durch mechanisches Einbringen von Luft oder mittels thermisch zersetzbarer, gasbildender Stoffe. Nachteilig sind dabei die Emissionen, verursacht durch Weichmacher- und Verdünnungsmittelanteile.

### Kalandrieren:

Seit längerer Zeit sind Kalanderschäume auf Basis von PVC und gasbildenden Stoffen für Anwendungen im Bereich Automobil, Kunstleder und Wandbeläge (Patent: JP 92-125 276 920519; Patent: JP 90-152 535 900613) bekannt. Das verwendete PVC muß ebenfalls weichgemacht sein und ist wegen des enthaltenen Chlors umweltschädlich. Ein Kalanderschaum auf polyolefinischer Basis ließ sich bisher nicht herstellen, weil der Erweichungsbereich der üblichen Polyolefine zu eng ist, um ihre Verarbeitung unterhalb der Zerstörungstemperatur des Schaumbildners auf Kalandern zu erlauben.

### Extrusion:

Das Extrudieren von Kunststoffolien, welche thermisch zersetzbare, schaumbildende Stoffe enthalten, ist in EP 0 259 531 und DE 3132 439 C2 beschrieben. Durch anschließende Erhitzung der Folie über den Zersetzungspunkt des Schaumbildners wird aufgeschäumt.

Momentan sind für diesen Zweck Polyolefine (Dichte: 0.91-0.96 g/cm³), Kautschukmischungen sowie chlorierte Polyethylene als Rohstoffbasis verwendbar. Üblich bei Olefinen sind vernetzende Systeme, unvernetzte Systeme werden nur bei chlorhaltigen Formulierungen eingesetzt.

Die Extrusion von breiten Schichten (2-5 m), wie sie insbesondere für Bodenbeläge erforderlich sind, ist technisch schwierig oder unmöglich.

### Streutechnologie:

Aus dem Patent GB 2191 209 sind Teppichrücken bekannt, die aus einer gestreuten Schaumschicht auf Basis von Polyethylen, EVA und Füllstoffen bestehen. Für die Streutechnologie ist die Einhaltung einer bestimmten Korngrößenverteilung entscheidend; im oben benannten Patent liegt die Teilchengröße im Bereich von 100-800 µm. Das Patent DE 41 21 401 beschreibt ebenfalls ein Streuverfahren zur Herstellung von mehrschichtigen, geschäumten PVC-freien Bodenbelägen. Die Korngröße liegt hierbei vorzugsweise im Bereich von 0-400 µm.

Das Patent EP 0 621 128 beschreibt ein Verfahren zur Herstellung mehrlagig aufgebauter thermoplastischer Fußbodenbeläge auf Polyolefinbasis. Es handelt sich hierbei um einen heterogenen Folienbelag. Im Anwendungsbeispiel 4 wird die Möglichkeit dargestellt eine Schaumfolie auf EVA-Basis in den Gesamtaufbau mit einzubringen. Das Doublieren/Laminieren einer bereits geschäumten Zwischenschicht ist jedoch äußerst schwierig.

Die aufgeführten Streuprozesse sind technisch sehr aufwendig (Compoundieren; Mahlen) und schwer zu beherrschen.

### Allgemeine Technologie:

Geschäumte Schichten sind aus den oben aufgeführten Patenten bereits bekannt. Nachteile sind vor allem:
- Einsatz von chlorhaltigen Produkten, die bei der Entsorgung/ Verbrennung Probleme bereiten
- Vernetzung ist unbedingt erforderlich, damit die Zellstruktur des Schaums stabilisiert wird. Vernetzte Systeme lassen sich schwieriger im Produktionsprozeß steuern und bereiten Probleme beim Recycling (je nach Vernetzungsgrad).
- Ein großer Teil der aufgeführten Patente enthält EVA, das je nach verwendetem Typ, auf Grund seines Restmonomergehaltes auch als kritisch eingestuft werden kann.

### Aufgabe der Erfindung:

Ziel der Neuentwicklung ist es, einen Halogen-, Weichmacher-, Schwermetall- und Lösungsmittelfreien und emissionsarmen Schaumbelag mit Hilfe der Kalandrier- und Doubliertechnologie darzustellen, welcher die vorstehenden Nachteile vermeidet. Diese Aufgabe wird durch die Merkmale der Hauptansprüche gelöst und durch die der Unteransprüche gefördert.

Die im neuen Bodenbelag vorliegenden Schaumschichten auf Polyolefinbasis sind, wie auch alle anderen olefinischen Belagsschichten, Halogen-, Schwermetall- und Weichmacherfrei. Die einzelnen Schichten sind so aufeinander abgestimmt, daß ein problemloses Recycling möglich ist. Die Dessinierung des Belags erfolgt durch eine bedruckte Zwischenschicht.

Erstaunlicherweise wurde gefunden, daß Polyolefin-Elastomeren (POE) und Polyolefin-Plastomeren (POP), welche nach einem neuen Polymerisationsverfahren durch Copolymerisation von Ethylen mit höheren Olefinen mittels Metallocen-Katalysatoren hergestellt werden (vgl. EP 461 815, US 5,278,272, US 5,278236, EP 0 273 654, EP 608 903), sich im Gegensatz zu den vorbekannten Polyolefinen, auch den bekannten α-Olefin/Ethylen-Copolymeren (VLDPE) nicht nur zu Folien verarbeiten lassen, sondern daß in solchen neuen Folien enthaltene, zersetzbare Stoffe auch unter Schaumbildung reagieren können. Mit diesen Polymeren konnten unvernetzte Kalanderschäume hergestellt werden mit vergleichbaren Eigenschaften wie geschäumte PVC-Beläge auf Plastisol-Basis. Die Schaumdichte liegt im Bereich von 0,15- 0,50 g/cm³.

Gegebenenfalls ist eine Vernetzung möglich, falls erhöhte Ansprüche gestellt werden.

Beispielsweise wurde festgestellt, daß bei der Schaumschicht die folgenden Komponenten die gewünschten Eigenschaften ergeben: 20-100 % POE ( Engage ^{R} 8501, MFI: 1.0; Dichte: 0,87 g/cm³) mit einem α-Olefin-Comonomerenanteil von 24 % und/oder 100-20 % POP (Affinity ^{R} DSH 1500, MFI: 1.0; Dichte: 0,902 g/cm³) mit einem α-Olefin-Comonomeranteil von 12 % sowie 0-80 % eines anderen Polyolefins. Die Schicht kann ferner noch bis zu 100, vorzugsweise 20-50 Teile eines mineralischen Füllstoffes z.B. Kreide, Kaolin, Aluminiumhydroxid, Magnesiumhydroxid, Schwerspat oder Kieselsäure, bezogen auf 100 Teile Kunststoff, enthalten. Farbgebende Zusätze und Hilfsmittel zur Erleichterung der Verarbeitung werden in Mengen bis zu 20 Teilen, bezogen auf 100 Teile Kunststoff, zugegeben. Als Treibmittel für die Schaumschicht verwendet man, die auch sonst übliche Produkte wie z.B.: Azodicarbonamid, Natriumhydrogencarbonat und Oxibisbenzolsulfohydrazit. Bei der Verwendung von Azodicarbonamid kann gegebenenfalls ein Aktivator auf Zink-Basis eingesetzt werden. Vorzugsweise wird Natriumhydrogencarbonat verwendet, da es eine sehr geringe Eigenfarbe hat.

Die Menge des Treibmittels richtet sich nach den Verarbeitungsbedingungen und der gewünschten Schaumdichte. Normalerweise werden 1 bis 10 Teile Treibmittel auf 100 Teile Kunststoff verwendet.

Bei mehrschichtigen Belägen werden die Dekorschicht und die ungeschäumten Folien auf der gleichen olefinischen Rohstoffbasis aufgebaut wie die Schaumschicht, jedoch ohne Zusatz von Treibmittel, so daß ein problemloses Recycling des Verbundes möglich ist. Insbesondere Produktionsabfälle - Randzonen, Verschnitt, Fehlchargen - können so direkt wieder in die Produktion zurückgeführt werden.

Falls eine Vernetzung gewünscht wird, kann als Vernetzer z.B. ein Peroxid eingesetzt werden. Der Belag wird mit einer transparenten, verschleißfesten, Halogen- und Weichmacherfreien Nutzschicht versehen (z.B. wie aus EP 0 621 128 ersichtlich).

### Herstellung von POE und POP

Üblich und bekannt ist bisher die Herstellung von Olefincopolymeren über Ziegler-Natta-Katalysatoren. Einsetzbar neben Ethylen sind hierbei Alpha-Olefine (Propene, Butene ... Octene o.ä.). Begrenzt ist diese Technologie dadurch, daß der niedrigste Dichtebereich bei den Ethylencopolymeren bei 0,91 liegt und aufgrund der mehrfachen aktiven Zentren des Ziegler-Natta-Katalysators auch unterschiedliche Polymere mit unterschiedlichen Comonomergehalten, Molekulargewichten und auch Taktizitäten (Verteilung der Comonere) dargestellt werden.

Dies führt zu Produkten einerseits mit sehr breiten Molekulargewichtsverteilungen, andererseits sind diese Produkte je nach Anteil von Comonomeren meist restoligomerhaltig, was aufgrund ihrer Migrationstendenz letztendlich zu Problemen der Weiterverarbeitung führt.

Neu an der Metallocen-Katalysatortechnologie ist, daß der Metallocen-Katalysator im Gegensatz zu Ziegler-Natta-Katalysatoren nur 1 aktives Zentrum besitzt und dadurch in der Lage ist, Moleküle gezielt aufzubauen (vgl. EP 461 815, US 5,278,272, US 5,278,236, EP 0 273 654, EP 608 903).

Im Prinzip ist es nach den in den vorstehenden Patenten beschriebenen Verfahren möglich, ganze Polymerketten einzufügen und somit z.B. Langkettenseitenverzweigungen zu schaffen. Dadurch bedingt ist es möglich, Polymere mit sehr hoher Weichheit, niedriger Dichte (unter 0,91 g/cm³) und einem hohen Grad an Amorphität herzustellen. Zudem weisen diese Polymere einen hohen Reinheitsgrad (keine migrierenden Restoligomere) auf.

Die genannten Vorteile der über Metallocen-Katalysatoren hergestellten Polymere, deren relativ niedriger Schmelzpunkt, deren hervorragende, über die Möglichkeit der Seitenkettenverzweigung hergestellte Schmelzefestigkeit und Schmelzestabilität erlauben es, unvernetzte polyolefinische Schaume mit sehr guten Eigenschaften herzustellen.

### Beispiele:

### Folie 1: Transparente Nutzschicht

70 Gew.-% eines Polyethylens sehr niederer Dichte (VLLDPE) mit einem MFI 1.1 (DOWLEX^{R}NG 5065 E) werden mit 30 Gew.-% eines Polypropylen-Random-Copolymeren mit einem Comonomergehalt von 5,5 % und einem MFI 1.5 (MOPLEN^{R} EP2 S 29 B) und mit 0,2 Gew.-% eines Calciumstearates (CEASIT^{R} I) und 0,2 Gew.-% eines sterisch gehinderten Phenols (IRGANOX^{R} 10102) und mit einem Lichtschutzmittel auf HALS-Basis (TINUVIN^{R} 770 DF) in Höhe von 0,8 Gew.-% versetzt, vorgemischt und in einem Stempelkneter bei 150 °C anplastifiziert und anschließend auf einem Zweiwalzenmischwerk weiter durchhomogenisiert, um nachfolgend über eine 4-Walzen-Kalanderanlage zu einer 0,08 bis 1,0 mm dicken transparenten Folie kalandriert zu werden, wobei von der ersten bis zur vierten Kalanderwalze die Verarbeitungstemperatur von 180 auf 170 °C sinkt.

### Folie 2: Dekorschicht

POE (MFI 1.0 und d: 0,87 g/cm³) (Engage^{R} 8501) bzw. POP (MFI 1.0 und d:
0,902 g/cm³) (Affinity^{R} DSH 1500) werden im Verhältnis 80:20 unter Hinzufügen von:
65 % Füllstoff bezogen auf 100 Teile Kunststoff
2 % Verarbeitungshilfsmitteln bezogen auf 100 Teile Kunststoff
5 % farbgebenden Komponenten bezogen auf 100 Teile Kunststoff
vorgemischt und im Stempelkneter plastifiziert. Anschließend wird auf einem Zweiwalzen-Mischwerk weiter homogenisiert und über eine 4-Walzen-Kalanderanlage eine kontinuierliche 0,4 mm starke Folienbahn ausgewalzt, wobei von der 1.-4. Kalanderwalze die Verarbeitungstemperaturen von 110-130 °C steigen. Die Folie wird anschließend vorbehandelt und mit wäßrigen Druckfarben bedruckt.

### Schaumfolie 1:

POE (MFI 1.0 und d: 0,87g/cm³) (Engage^{R} 8501) bzw. POP (MFI 1.0 und d: 0,902 g/cm³) (Affinity^{R} DSH 1500) werden im Verhältnis 70:30 unter Hinzufügen von: 25 % Füllstoff bezogen auf 100 Teile Kunststoff 2 % Verarbeitungshilfsmitteln bezogen auf 100 Teile Kunststoff 5 % Natriumhydrogencarbonat als Treibmittel, bezogen auf 100 Teile Kunststoff, vorgemischt und im Stempelkneter plastifiziert. Anschließend wird auf einem Zweiwalzen-Mischwerk weiter homogenisiert und über eine 4-Walzen-Kalanderanlage eine kontinuierliche Folienbahn ausgewalzt, wobei von der 1.-4. Kalanderwalze die Verarbeitungstemperaturen von 110-125 °C steigen. Die Kalandertemperatur wurde so gewählt, daß sie unterhalb der Zersetzungstemperatur des Treibmittels liegt. Auf diese Weise wird eine kompakte 0.4 mm dicke Folie erhalten. Die Folie wird erst nach dem Laminieren aufgeschäumt.

### Vernetzte Schaumfolie 1:

POE (MFI 1.0 und d: 0,87g/cm³) (Engage^{R} 8501) bzw. POP (MFI 1.0 und d:
0,902 g/cm³) (Affinity^{R} DSH 1500) werden im Verhältnis 70:30 unter Hinzufügen von:
25 % Füllstoff bezogen auf 100 Teile Kunststoff
2 % Verarbeitungshilfsmitteln bezogen auf 100 Teile Kunststoff
5 % Natriumhydrogencarbonat als Treibmittel bezogen auf 100 Teile Kunststoff
1 % tert. Butyl-cumyl-peroxid als Vernetzer bezogen auf 100 Teile Kunststoff
vorgemischt und im Stempelkneter plastifiziert. Anschließend wird auf einem Zweiwalzen-Mischwerk weiter homogenisiert und über eine 4-Walzen-Kalanderanlage eine kontinuierliche 0,4 mm starke Folienbahn ausgewalzt, wobei von der 1.-4. Kalanderwalze die Verarbeitungstemperaturen von 100-125 °C steigen. Die Verarbeitungstemperatur am Kalander liegt hierbei unterhalb der Aktivierungstemperatur des Vernetzers und unterhalb der Zersetzungstemperatur des Treibmittels. Hierbei wird eine 0,4 mm starke kompakte Folie erhalten, auch diese wird erst im Verbund geschäumt.

### Anwendungsbeispiele:

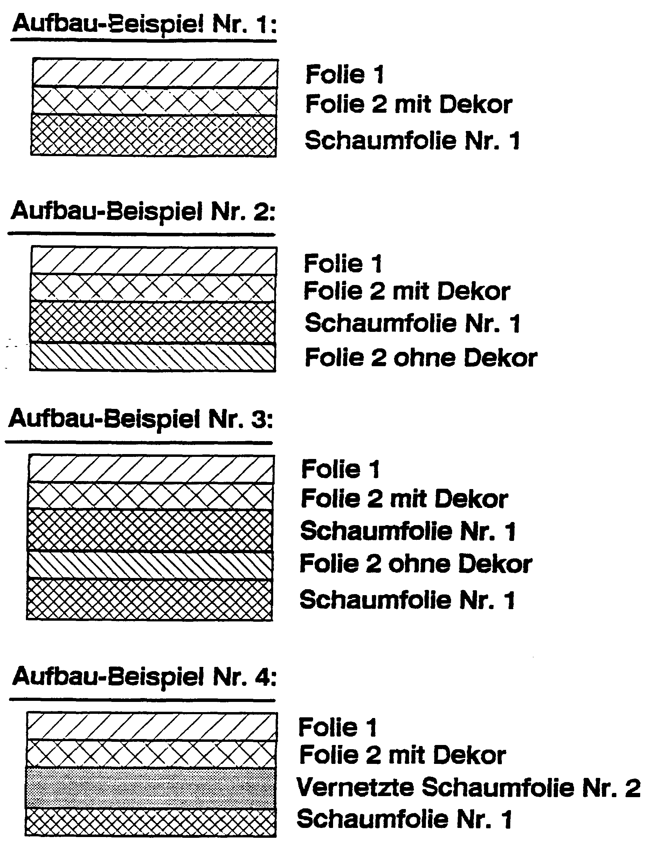

### Anwendungsbeispiel Nr. 1 (Abb. 1):

Auf einer Doublierkalanderanlage werden Folie 1 (transparente Nutzschicht), Folie 2 (Dekorschicht) und Schaumfolie 1 zu einer 1,1 mm dicken Folienbahn zusammengefügt und anschließend bei 185 °C im Kanal zu einer Enddicke von 2 mm aufgeschäumt. Als Unterlage zum Schäumen kann gegebenenfalls ein Releasepapier verwendet werden.

### Anwendungsbeispiel Nr. 2 (Abb. 2):

Vorgehensweise analog Beispiel Nr. 1; die Schaumfolie wird jedoch mit einer weiteren Folie 2, die ggf. auf der Unterseite bedruckt ist, unterlegt. Der Schaumbelag hat eine Gesamtdicke von 2,5 mm.

### Anwendungsbeispiel Nr. 3 (Abb. 3):

Vorgehensweise analog Beispiel Nr. 1. Es können verschiedene Schaum- und Kompaktfolien miteinander kombiniert werden, um unterschiedliche Eigenschaftsprofile zu erreichen.

### Anwendungsbeispiel Nr. 4 (Abb. 4):

Vorgehensweise analog Beispiel Nr. 1, unter Kombination einer Folie 1, einer Folie 2, einer vernetzbaren und einer nicht vernetzten Schaumschicht. Die Verwendung einer vernetzten Schicht ermöglicht eine zusätzliche Stabilität der Schaumunterlage.

Die so erhaltenen Beläge haben vergleichbare mechanische Eigenschaften wie CV-Beläge, aber nicht deren Umweltprobleme:

**Tabelle Nr. 1**

| | CV-Belag | PO-Belag Beispiel Nr. 3 |
|---|---|---|
| Resteindruck (EN 433) | 0,30 mm | 0,26 mm |
| Rückfederung | 85 % | 86 % |
| Gesamtdicke | 3,5 mm | 3,0 mm |
| Trittschallschutzverbesserungsmaß DIN 52210 | 17 dB | 14 dB |
| Fußbodenheizung | geeignet | geeignet |
| Nutzschicht | 0,25 mm | 0,25 mm |
| Lichtechtheit DIN 53389 | Stufe 6-7 | Stufe 6-7 |

Je nach Art der transparenten Abdeckung ist eine chemische Inhibierung vergleichbar mit PVC-CV-Belägen möglich. Jede Art von mechanischer Prägung ist denkbar.

## Patentansprüche

1. Verfahren zum Herstellen von geschäumten Schichten aus Polyolefinen auf Kalandern, **dadurch gekennzeichnet**, daß als Polyolefine mit Metallocen-Katalysatoren polymerisierte Polyolefin-Elastomere (POE) (oder Polyolefin-Plastomere (POP)) in einer Menge von
20-100 % POE und/oder
20-100% POP sowie
0 - 80 % eines anderen Polyolefins
verwendet werden, welche zusammen mit
bis zu 100 Teilen eines mineralischen Füllstoffes und
1 - 10 Teilen eines geeigneten chemischen Treibmittels
bezogen auf 100 Teile Polyolefin
bei geeigneten Temperaturen auf einem Mehrwalzenkalander zu Folien ausgewalzt, und diese allein oder nach doublieren mit anderen Treibmittel-freien Folien aus Polyolefinen in einem Schäumofen auf Temperaturen über dem Zersetzungspunkt des Treibmittels erhitzt und aufgeschäumt werden.

2. Verfahren nach Anspruch 1, **dadurch gekennzeichnet**, daß 20-50 Teile Füllstoff auf 100 Teile Polyolefin enthalten sind.

3. Verfahren nach Anspruch 1 oder 2, **dadurch gekennzeichnet**, daß offenliegende Seiten der zu schäumenden Schicht mit einer Release-Schicht abgedeckt werden.

4. Verfahren nach Anspruch 1 bis 3, **dadurch gekennzeichnet**, daß die geschäumten Schichten in einem Verbund mit den nicht verschäumten Schichten hergestellt wurden, die aus den gleichen Polyolefinen bestehen wie die geschäumten Schichten.

5. Verfahren nach einem der Ansprüche 1 bis 4, **dadurch gekennzeichnet**, daß die geschäumten Schichten noch ein Vernetzungsmittel enthalten, welches bei der Schäumungstemperatur reagiert und eine Verfestigung der Schaumschicht bewirkt.

6. Verfahren nach einem der Ansprüche 1 bis 5, **dadurch gekennzeichnet**, daß die Schichten mit einem Dekor bedruckt werden und/oder durch Bedrucken mit einem Inhibitor oder Akzellerator für das Treibmittel in ungleichmäßiger Stärke geschäumt werden.

7. Beläge mit geschäumten Zwischenschichten, hergestellt nach Verfahren gemäß einem der Ansprüche 1-6.
